# EUROPEAN PATENT APPLICATION

(11) **EP 0 537 061 A2**
(43) Date of publication of application: **14.04.1993**
(21) Application number: 92402722.0
(22) Date of filing: 06.10.1992
(51) Int. Cl.: G06F 15/16, G06F 9/46, H04L 29/06

(54) **Data communication system**

(30) Priority: 08.10.1991 JP 260673/91
(71) Applicant: MITSUBISHI JUKOGYO KABUSHIKI KAISHA, Tokyo (JP)
(72) Inventor: Kuwahara, Koji, c/o Kobe Shipyard & Mach. Works, Hyogo-ku, Kobe-shi, Hyogo-ken (JP); Ide, Mikio, c/o Takasago Res. & Development Center, Arai-cho, Takasago-shi, Hyogo-ken (JP)
(74) Representative: Rodhain, Claude

(57) **Abstract**

A data communication system is disclosed in which when each of stations requires data included in other stations, a station requiring data previously informs to stations having the data of names of the data and an ID corresponding to the name and which is an only identifier in a network system before data communication and thereafter the communication of data can be performed by means of only the ID.

## Description

### BACKGROUND OF THE INVENTION

### 1. Field of the Invention

The present invention relates to a data communication system, and more particularly to a data communication system which performs a fixed form of communication at high speed in transmission and reception of data performed by a plurality of apparatuses through a common transmission line and which automatically standardizes a form of communication when the form is changed.

### 2. Description of the Related Art

When a plurality of stations connected to one another by means of a transmission system exchange data with each other, there is a method in which a name of data and its value are paired to be transmitted and a station receives the name and data to utilize the data while referring to the data name.

In this method, the name of data is always communicated through the transmission line and hence the communication efficiency is degraded. Further, when a large amount of data is communicated, the transmission line is occupied for a long time and there is a danger that functions of the whole system are deteriorated.

In contrast to this method, there is a method in which communication data between stations is previously determined and data received from a certain station includes predetermined data. In this method, since a name of data is not quite communicated through a transmission line, efficient communication can be made. However, the structure of communication data is fixed and accordingly when the structure of data is changed for reasons of operation, a data processing portion in each of stations must be changed and there is no flexibility as a system. Further, in order to change the structure of data, the whole system must be stopped if necessary.

### SUMMARY OF THE INVENTION

It is an object of the present invention to provide a data communication system capable of performing efficient data communication and modifying the structure of communication data without stopping the system and without changing a data processing portion of stations.

In order to achieve the above object, before data communication is started, each of stations divides or classifies names of required data into partial aggregation or subset (named DCL: Data Construction List) for each station having the data only one time to perform communication and stores a packet ID numbered at this time. Thereafter, data communication can be made only by informing the packet ID. Detailed measures are described below.

First of all, each of stations stores information relative to data included in all of the stations in the form of a list or table (named correspondence table) in which names of data correspond to names of stations having the data.

Then, each of the stations assigns an only identification number (named a packet ID) in a system to aggregation of names of data judged to be required for process by a certain station. Thus, the correspondence table is used to decompose names of the required data into DCL for each of other stations having desired data. The DCL consists of names of data. One numbered packet ID corresponds to a plurality of DCLs divided for each station. Further, the DCLs and the packet ID are informed to other stations. In this manner, data transmitting stations and data receiving stations store the packet ID and the names of data designated by the packet ID in correspondence manner.

Then, when the other station receives the packet ID and the DCL, the station refers to the correspondence table between names of data it has and the addresses in the memory in which data represented by the names of data is stored, and it then arranges addresses in which the designated data are stored as a table (named a link table) in the order of data included in the DCL to store the addresses in correspondence to the packet ID.

Thereafter, when a certain station requires data actually, the station informs other stations of only the packet ID. When the station receives the packet ID and the packet ID has been already stored in the packet ID memory, the station refers to the link table to collect data, so that the station returns an aggregation of data to the transmission station of the packet ID (that is, the data requiring station) together with the packet ID.

When the transmitted packet ID is not stored in the other station from which data is required, the station returns an unsuccessful signal to the data requiring station together with the packet ID. When the data requiring station receives the unsuccessful signal, the data requiring station prepares the DCL with reference to the correspondence table in the same manner as the first time. Thus, the DCL is transmitted to other stations together with the packet ID and thereafter only the packet ID is informed.

When the structure of data in the data requiring station is changed, the packet ID is assigned to the aggregation of names of data judged to be required for process by the station again as described above. Thus, the correspondence table is used to decompose the aggregation of names of desired data into the DCL for each other station having required data and the DCL and the packet ID are informed to the associated station. Both of the transmitting and receiving stations store the packet ID and the names of data represented by the packet ID in correspondence manner. At the same time, the stations which have received a new DCL and packet ID clear all of packet ID informed from the same station in the past and stored in a memory thereof.

The present invention functions as follows. That is, the station requiring the data transmits the DCL and the packet ID assigned to the DCL to the station having the data only one time before start of communication. At this time, since both of the stations store the packet ID, data communication can be made thereafter only by informing the packet ID.

Further, when the structure of data of a certain station is changed during operation of the system, the present invention functions as follows. That is, the packet ID is assigned to the aggregation of names of data judged to be required for process by the station and the correspondence table is used to decompose the aggregation of names of data into the DCL for each of other station having required data. Thus, the DCL and the packet ID are informed to the associated stations. Both transmitting and receiving stations store the packet ID and the names of data represented by the packet ID in a correspondence manner. Accordingly, the data requiring station can obtain data of other station by using the new packet ID.

When the structure of data of the station from which data is required is changed, the present invention functions as follows. That is, since the packet ID issued in the past and stored in two stations is lost in the station with the structure of data changed, an unsuccessful signal is returned to the data requiring station. Accordingly, the data requiring station issues a new packet ID and transmits the packet ID and the DCL to the station having the data. In response to notification of the DCL, the station having the data refers to the correspondence table between the names of data it has and the addresses of the memory in which the data are stored, and it prepares and stores the link table in correspondence to the packet ID. Accordingly, if the data requiring station requests the data by transmitting only the packet ID, the data requiring station can receive the correct data from the other station.

As described above, even when the structure of communication data is changed, the DCL is replaced each time of the change and exact data communication can be made.

As described above, according to the present invention, it is necessary to transmit the names of data, while the names of data to be required are divided into the DCL for each station having the data only one time to transmit it and the packet ID assigned at this time is stored. Thereafter, data communication can be made only by informing the packet ID. Accordingly, there is a merit that effective communication can be made.

Further, when the structure of data is changed, the DCL and the packet ID are changed and transmitted to associate data between stations and accordingly there is a merit that flexibility is not deteriorated.

### BRIEF DESCRIPTION OF THE DRAWINGS

Fig. 1 is a block diagram schematically illustrating a data communication system according to an embodiment of the present invention;
Fig. 2 is a schematic diagram illustrating a network system to which the present invention is applied;
Fig. 3 is a diagram showing a data structure of a general DCL;
Fig. 4 is a diagram showing a structure of DCL for arrayed data;
Fig. 5 is a flow chart showing a procedure of a communication program of a data requiring station; and
Fig. 6 is a flow chart showing a procedure of a communication program of a data returning station.

### DETAILED DESCRIPTION OF THE PREFERRED EMBODIMENT

An embodiment of the present invention is now described with reference to the accompanying drawings.

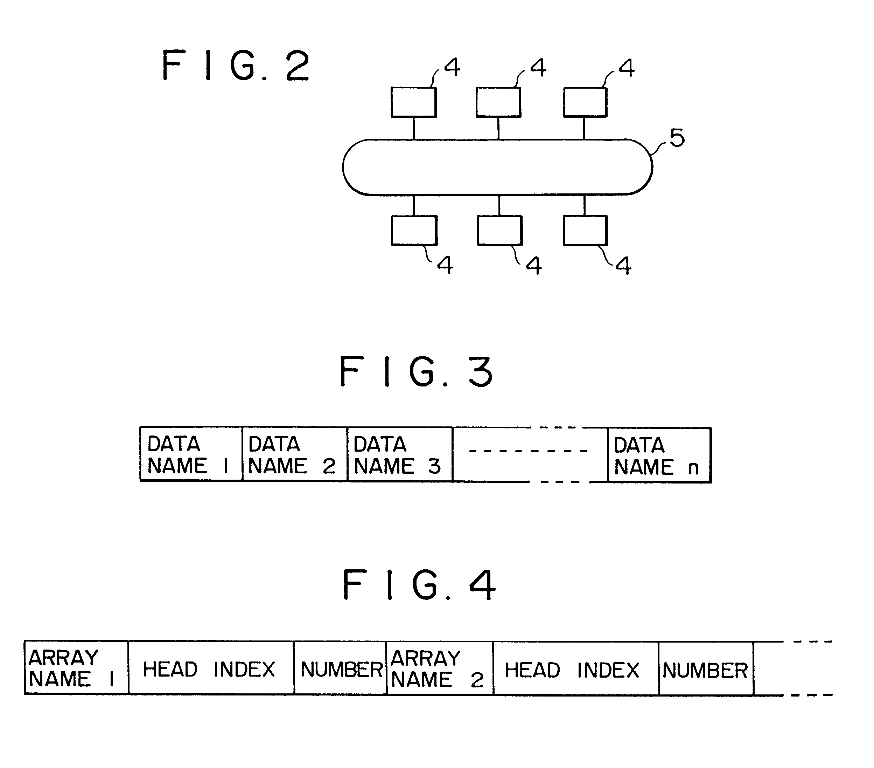

Fig. 2 schematically illustrates a configuration of a network system to which the present invention is applied. In this example, a plurality of stations 4 are connected to an annular transmission line 5. However, it is a matter of course that the transmission line 5 does not have to be connected into a ring form. When a certain station of the stations 4 requires data stored in other stations, the data is transmitted or acquired through the transmission line 5.

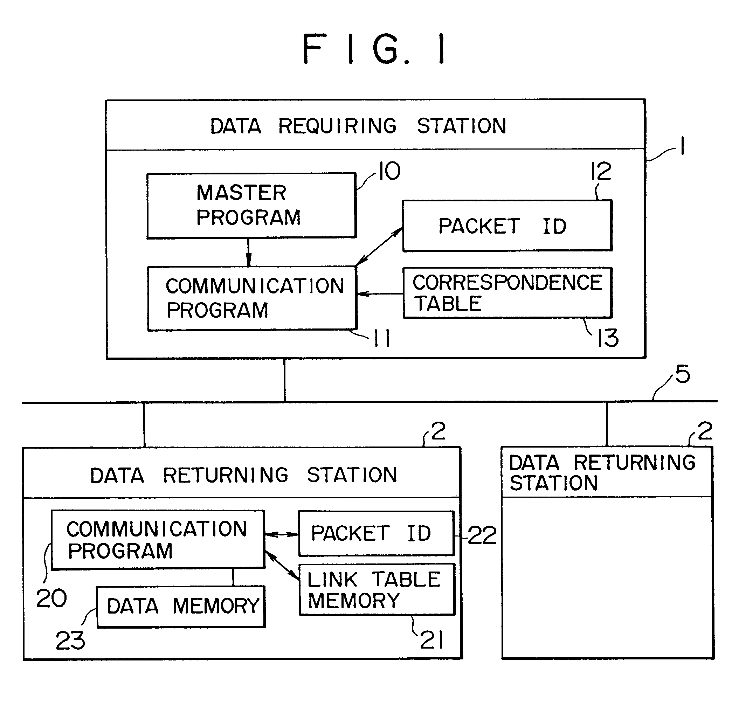

Fig. 1 schematically illustrates the function relative to the present invention in the case where a station 1 requiring data (data requiring station) requires data to a station 2 having the data (data returning station). The station 1 may be any station of Fig. 2. Each of the stations 4 of Fig. 2 becomes a data requiring station 1 at some time and becomes a data returning station 2 at some other time.

When a master program 10 executed by the station 1 requires data of the other station 2, names of the data are delivered to a communication program 11 as a general DCL. The general DCL represents aggregation of names of data which station 1 requires. Further, the general DCL is character information consisting of names of data which are merely arranged as shown in Fig. 3, for example. The general DCL may be any form as far as it is information capable of deciding data to be communicated. For arrayed data, for example, the general DCL may be information having names of arrays, head indexes and the number arranged as shown in Fig. 4. Further, the general DCL may be a data group name indicative of a plurality of data. Furthermore, the general DCL may be a group name having data groups as members.

The communication program 11 specifies stations having the data included in the general DCL informed from the master program 10 with reference to a correspondence table memory 13 to prepare each individual DCL decomposed for each station having the data. A format of the decomposed individual DCL is the same as the general DCL.

At the same time, the communication program 11 issues an only packet ID in the system and stores it in a packet ID memory 12. The packet ID may be an integral number which is successively numbered in order of issue, for example.

The station 1 transmits the DCL to the station 2 together with the packet ID. A communication program 20 of the station 2 receives the packet ID and the DCL and detects addresses of data corresponding to names of data included in the DCL from a data memory 23 in which values of the data are stored to store the addresses in a link table memory 21 in order designated by the DCL. At the same time, the communication program 20 of the station 2 stores the transmitted packet ID in a packet ID memory 22.

The master program 10 of the station 1 requests the communication program 11 to transmit only the packet ID The communication program 11 transmits the packet ID to the station 2.

The communication program 20 of the station 2 which has received only the packet ID examines whether a packet ID coincident with the received packet ID is stored in the packet ID memory 22 or not and if it is stored in the memory 22 the communication program 20 takes out data from the data memory 23 while referring to the corresponding link table memory 21, so that the data is returned to the station 1 which requires the data.

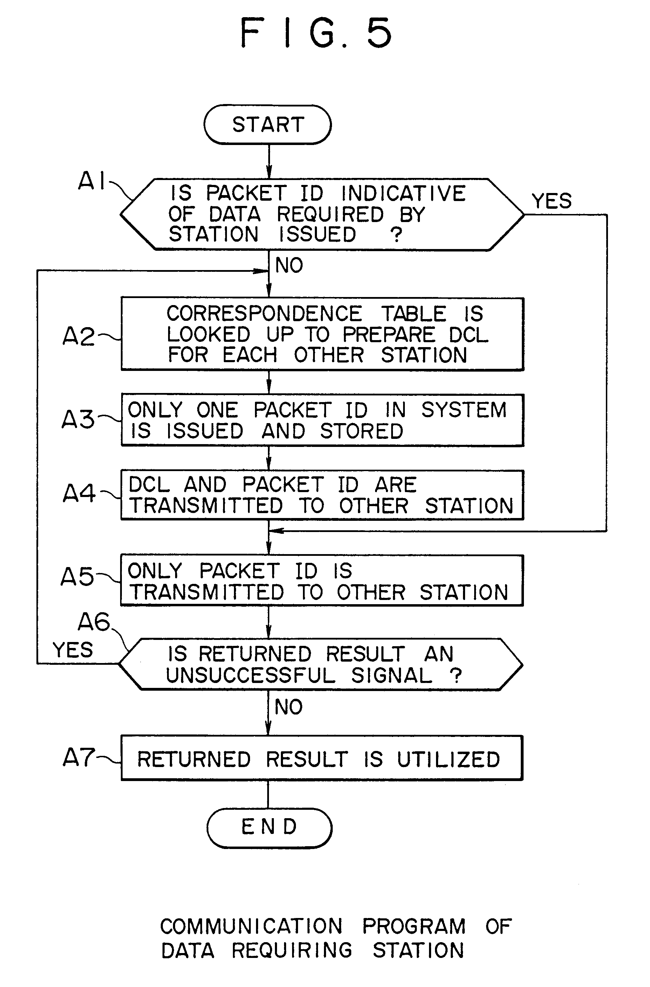

Fig. 5 is a flow chart showing an actual procedure of the communication program 11 of the data requiring station 1.

If the packet ID indicative of the data required by the station 1 is already issued, the communication program 11 of the station 1 transmits only the packet ID to the station 2 (step A1).

If it is not issued, the communication program 11 of the station 1 looks up the correspondence table memory 13 to prepare the DCL (partial aggregation) (step A2). Then, the communication program 11 issues the only packet ID in the system and stores it in the packet ID memory 12. At the same time, the communication program 11 of the station 1 transmits the packet ID and the DCL to the station 2 to inform the station 2 of them (steps A3 and A4). Subsequently, the station 1 transmits only the packet ID in order to request the data.

The station 1 examines whether a result returned from the station 2 is an unsuccessful signal or not (step A6). If it is not the unsuccessful signal, the station 1 judges that the data has been transmitted normally and completes the receiving operation. Thus, the returned result is utilized to perform a desired data processing operation (step A7).

If the returned result is an unsuccessful signal, the station 1 judges that the structure of data of the other party or the station 2 is changed. The process is returned to step S2 so that the station 1 retries to inform the station 2 of the DCL.

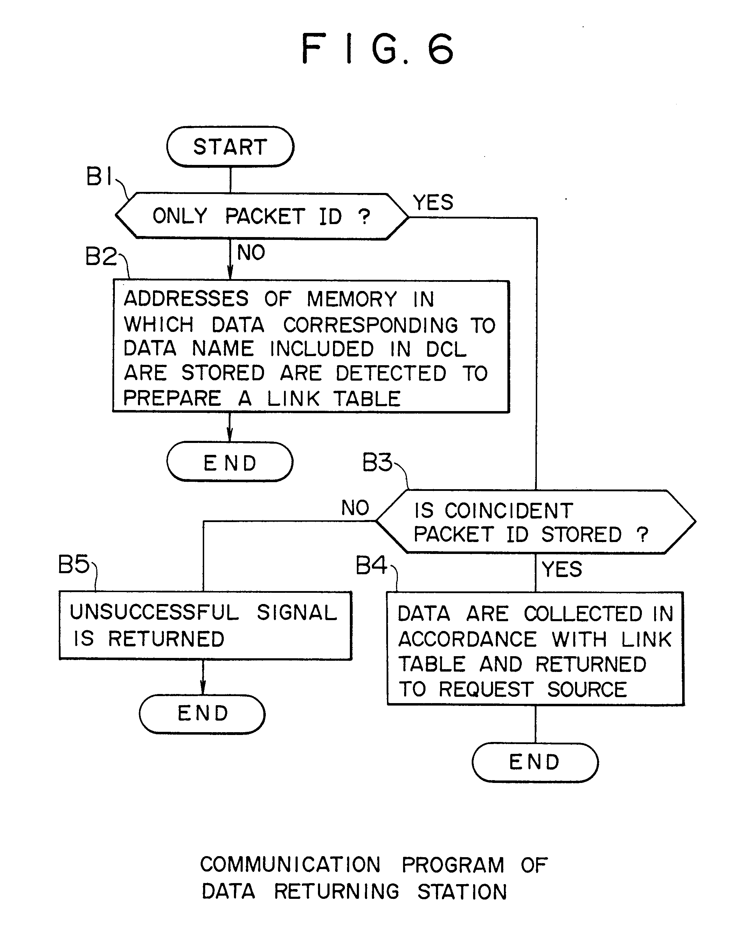

Fig. 6 is a flow chart showing an actual procedure of the communication program 20 of the station 2 which returns the data.

First of all, the communication program 20 of the station 2 examines whether the received data contain only the packet ID or the DCL together with the packet ID (step B1).

If the received data is not the packet ID only, an address of the data memory 23 in which data corresponding to the name of the data included in the transmitted DCL is stored is detected and stored in the link table memory 21 to prepare a link table (step B2).

If the received data is only the packet ID, it is judge that there is a request to return the data and whether a packet ID coincident with the transmitted packet ID is stored in the packet ID memory 22 or not is examined (step B3).

If the coincident packet ID is stored, data are collected in accordance with table contents of the corresponding link table memory 21 and are returned to the station 1 which requires the data (step B4).

Further, if the coincident packet ID is not stored, an unsuccessful signal is returned to the station 1 (step B5). The station 1 of the data requiring station which has received the unsuccessful signal retries to issue the DCL and the packet ID as described above. Thus, when the station 2 receives a next packet ID, the station 2 can return correct data.

## Claims

1. A data communication system including a plurality of stations connected through a common line, each of said stations comprising:
table memory means for storing a correspondence table in which names of data included in said stations correspond to names of said stations;
transmission means for transmitting a name of data required by a station and an ID of an only identifier in a data communication system to stations having said required data while referring to said correspondence table;
link table memory means adapted to receive said name of data and said ID for preparing and storing a link table in which said ID is associated with an address in which said data is stored;
ID transmission means for transmitting said ID to said stations having said required data while referring to said correspondence table; and
data transmission means adapted to receive said ID for collecting said data from said address associated with said ID to transmit said data to a transmission station of said name of data.

2. A data communication method among a plurality of stations connected through a common line, comprising:
storing a correspondence table in which names of data included in said stations correspond to names of said stations;
transmitting a name of data required by a station and an ID of an only identifier in said data communication system to stations having said required data while referring to said correspondence table;
receiving said name of data and said ID to prepare and store a link table in which said ID is associated with an address in which said data is stored;
transmitting said ID to said stations having said required data while referring to said correspondence table; and
receiving said ID and collecting said data from said address associated with said ID to transmit said data to a transmission station of said name of data.
